# EUROPÄISCHE PATENTSCHRIFT

(11) **EP 0 799 158 B1**
(45) Veröffentlichungstag und Bekanntmachung des Hinweises auf die Patenterteilung: **23.08.2000**
(21) Anmeldenummer: 95943200.6
(22) Anmeldetag: 22.12.1995
(51) Int. Cl.: C02F 1/44, B01D 61/04

(54) **VERFAHREN UND ANLAGE ZUR AUFBEREITUNG KAMPFSTOFFVERGIFTETER WÄSSER**
METHOD AND FACILITY FOR TREATING WATER CONTAMINATED WITH WARFARE AGENTS
PROCEDE ET INSTALLATION DE TRAITEMENT D'EAUX CONTAMINEES PAR DES AGENTS CHIMIQUES DE COMBAT

(30) Priorität: 23.12.1994 DE 4446211
(43) Veröffentlichungstag der Anmeldung: 08.10.1997
(73) Patentinhaber: Berkefeld Filter Anlagenbau GmbH, 29227 Celle (DE)
(72) Erfinder: GRABOWSKI, Alexander, D-29614 Soltau (DE); DOLLE, Michael, D-21272 Egestorf (DE); HÄSER, Ingo, D-56281 Emmelshausen (DE)
(74) Vertreter: Luderschmidt, Schüler & Partner GbR
(86) Internationale Anmeldenummer: EP9505113
(87) Internationale Veröffentlichungsnummer: WO9620135

(56) Entgegenhaltungen:
- EP-A- 0 352 779
- DD-A- 300 751
- US-A- 4 865 726
- W. LORCH: "Handbook of Water Purification" 1981 , MACGRAW-HILL , LONDON XP002002017 siehe Abbildungen 8.27,8.29
- DESALINATION, Bd. 75, Nr. 1/3, November 1989, AMSTERDAM, NL, Seiten 363-378, XP000201297 JANOS SIKORA: "Pre-treatment and Desalination of Mine Drainage Water in a Pilot Plant"
- CHEMICAL ABSTRACTS, vol. 88, no. 20, 15.Mai 1978 Columbus, Ohio, US; abstract no. 141236k, LINDSTEN, DON C.: "Decontamination of water containing chemical and radiological warfare agents by reverse osmosis" Seite 305; Spalte 1; XP002002018 & U.S. NTIS AD REPORT, AD-A046203, 1977,
- CHEMICAL ABSTRACTS, vol. 117, no. 6, 10.August 1992 Columbus, Ohio, US; abstract no. 55559d, AGUI: "Removal of dissolved humic substances from water with a reverse osmosis membrane" Seite 447; Spalte 1; XP002002019 & SCI. TOTAL ENVIRON., Bd. 117-118, 1992, Seiten 543-550,

## Beschreibung

Die Erfindung betrifft ein Verfahren nach dem Oberbegriff des Anspruches 1 und eine Anlage nach dem Oberbegriff des Anspruches 8.

Ein derartiges Verfahren und eine derartige Anlage ist aus der EP-O 352 779 B1 und der US 48 65 726 bekannt. Dieses Verfahren ist jedoch nur eingeschränkt zur Aufarbeitung von kampfstoffvergifteten Süßwässern geeignet. Denn Kampfstoffe haben die Eigenschaft, daß sie wie Weichmacher auf die semipermeablen, aus organischen Materialien gebildeten Membranen von Trennstufen einwirken. Dies führt dazu, daß Kampfstoffe nach einigen Stunden Betrieb in immer größerem Ausmaß die Membranen von Trennstufen durchdringen.

Aus US-NTIS, AD REP (1977) AD-A046203,57 PP ist der Einsatz unterschiedlicher Membranmaterialien für die Umkehrosmose bei der Abtrennung von Kampfstoffen beschrieben, wobei sich PA-Membranen als vorteilhaft erwiesen. Es ist jedoch nicht ausgeführt, welche Standzeit diese Membranen haben und wie das Abtrennverhalten dieser Membranen verbessert werden kann.

Der Erfindung liegt ausgehend vom bekannten Fall die Aufgabe zugrunde, die Aufarbeitung von kampfstoffvergifteten Wässern zu verbessern.

Diese Aufgabe wird erfindungsgemäß durch die kennzeichnenden Merkmale des Anspruches 1 oder 8 gelöst.

Der Vorteil der Erfindung besteht darin, daß die Membranen der nach der Umkehrosmose arbeitenden Trennstufen selbst nach langer Betriebszeit nicht in unzulässigem Maße von Kampfstoffen durchdrungen werden. Mit anderen Worten ausgedrückt, behalten die Membranen ihre sperrende Wirkung gegen Kampfstoffe unabhängig von der Betriebsdauer bei.

Ein weiterer Vorteil der Erfindung besteht darin, daß infolge der durch die Aufsalzung erreichten höheren Rückhalterate Membranen zur Entgiftung einer vorgegebenen Menge Wasser pro Zeiteinheit eine Anlage geringerer Leistungsfähigkeit verwendet werden kann, als dies bei konventioneller Anlagenkonzeption der Fall wäre.

Die abzutrennenden Kampfstoffe sind beispielsweise im Lehrbuch der Militärchemie, 2. Auflage, Militärverlag der DDR 1977, beschrieben. Erfahrungsgemäß abtrennbare Kampfstoffe sind Nervenkampfstoffe wie diejenigen vom V-Typ, vom G-Typ wie Sarin oder Tabun, Kampfstoffe in Form von Arsenverbindungen, wie Lewisit, oder Loste, wie Stickstoff-Lost.

Die Grenzkonzentrationen dieser Kampfstoffe in Wasser liegen für VX bei maximal 20 ppb gemäß Nato-Standardisierungsabkommen STANAG 2136 und für das in Lewisit enthaltene Arsen bei 100 ppb gemäß der deutschen Trinkwasserverordnung. Andererseits können jedoch bis zu 10 ppm dieser Kampfstoffe in Trinkwasser gelöst sein, sofern es zum Ernstfall kommt.

Erfindungsgemäß wurde nun festgestellt, daß sich Kampfstoffe durch Umkehrosmose dann besonders vorteilhaft abtrennen lassen, wenn das kontaminierte Trinkwasser zugleich mit Salz versetzt wird. Erfindungsgemäß liegt der Salzgehalt des kontaminierten Trinkwassers oberhalb 1000, vorzugsweise oberhalb 2000 und insbesondere oberhalb 3000 ppm, wobei sich die Teile auf das Gewicht beziehen.

Als Salze lassen sich die üblichen hygienisch unbedenklichen Salze, insbesondere Kochsalz einsetzen.

Als Umkehrosmoseeinheiten werden vorteilhafterweise diejenigen Umkehrosmosemembranen eingesetzt, die sich bei der Entsalzung von Meerwasser bereits bewährt haben.

Die aus organischen Polymeren gebildeten Membranen können beispielsweise aus Polypropylen, Polyamid, Polysulfon oder Acetat bestehen. Andererseits können jedoch aber auch Komposit-Membranen eingesetzt werden, die beispielsweise von der Firma Filmtec geliefert werden. Diese Membranen haben typischerweise einen Salzrückhaltegrad von > 99 % und können Drücke bis 6,9 MPa und Betriebstemperaturen bis 45°C aushalten.

Vorteilhafterweise werden derartige Umkehrosmoseeinheiten hintereinander - oder kaskadenförmig geschaltet, um den Trenngrad zu verbessern. Dabei wird das von einer ersten Stufe abgeschiedene Permeat auf eine zweite Stufe bzw. eine weitere Stufe geschaltet, um dort erneut der Umkehrosmose unterworfen zu werden.

Gemäß der Erfindung salzt man das Rohwasser auf, was genau dem Gegenteil von üblichen Verfahren zur Trinkwassergewinnung entspricht. Denn mit steigendem Salzgehalt des Rohwassers vergrößert sich der auf das Rohwasser aufzubringende Druck, um die Trennstufe betreiben zu können. In völlig überraschender Weise zeigte sich, daß durch die Aufsalzung die chemische Stabilität der Membranen gegen Kampfstoffe erhalten bleibt. Den Vorteil, den man durch die Erhöhung der Standfestigkeit der Membranen erhält, überwiegt bei weitem den Nachteil, den man sich durch die Aufsalzung des Rohwassers einhandelt.

Überraschenderweise zeigt sich, daß bereits die Aufsalzung in den vorstehend erwähnten Mengen eine Verbesserung des Abtrenngrades der Kampfstoffe um 30-50 % ergibt, denn zu Beginn der Abtrennung liegen die Abtrennraten unter Zugabe von Salz zum verseuchten Wasser um diesen Betrag besser. So können die Abtrennraten von VX aus einem Testwasser, das mit ca. 10 ppm VX versetzt worden ist, bei Durchlaufen eines Umkehrosmose-Teststandes ohne Zusatz von Salz in den ersten beiden Stunden bei etwa 5-8 ppb gehalten werden, während unter Zugabe von 3000 ppm Kochsalz zum Wasser die Abtrennraten auf ca. 2-5 ppb sinken, und somit zunächst in beiden Fällen unter die Grenze von 20 ppb zu liegen kommen. Zusätzlich tritt der überraschende Effekt auf, daß auch nach mehreren Stunden die Abtrennrate der Kampfstoffe bei aufgesalzenem Wasser sich praktisch nicht verändert, während sie bei nichtgesalzenem Wasser steil ansteigt und die kritische Grenze von 20 ppb durchbricht.

Gemäß einer vorteilhaften Ausführungsform kann das behandelte Retentat einer Einrichtung zur chemischen und/oder physikalischen Vernichtung der Kampfstofe zugeführt werden. Dabei durchläuft das Retentat kontinuierlich oder diskontinuierlich diese Einheit, in der die Kampfstoffe zu unschädlichen chemischen Verbindungen zersetzt werden.

So läßt sich VX beispielsweise in einem solchen Aggregat bei einem Druck von mindesten 219 bar und einer Temperatur oberhalb 375°C im suprakritischen Bereich zersetzen.

Die derart behandelten Ströme können dann, gegebenenfalls unter Abtrennung der Zersetzungsprodukte, wieder dem Wasserbehandlungskreislauf zugeführt werden.

Vorteilhafte Ausgestaltungen der Erfindung geben die Ansprüche 2 bis 7 und 9 bis 12.

Die Erfindung wird nachfolgend beispielhaft anhand der Zeichnungen näher erläutert. Dabei zeigen
- Fig. 1: eine nach der Umkehrosmose arbeitende Trennstufe als Prinzipskizze;
- Fig. 2: ein Diagramm zur Verdeutlichung, daß durch die Aufsalzung des Rohwassers die Membran gegenüber Kampfstoffen stabil bleibt.

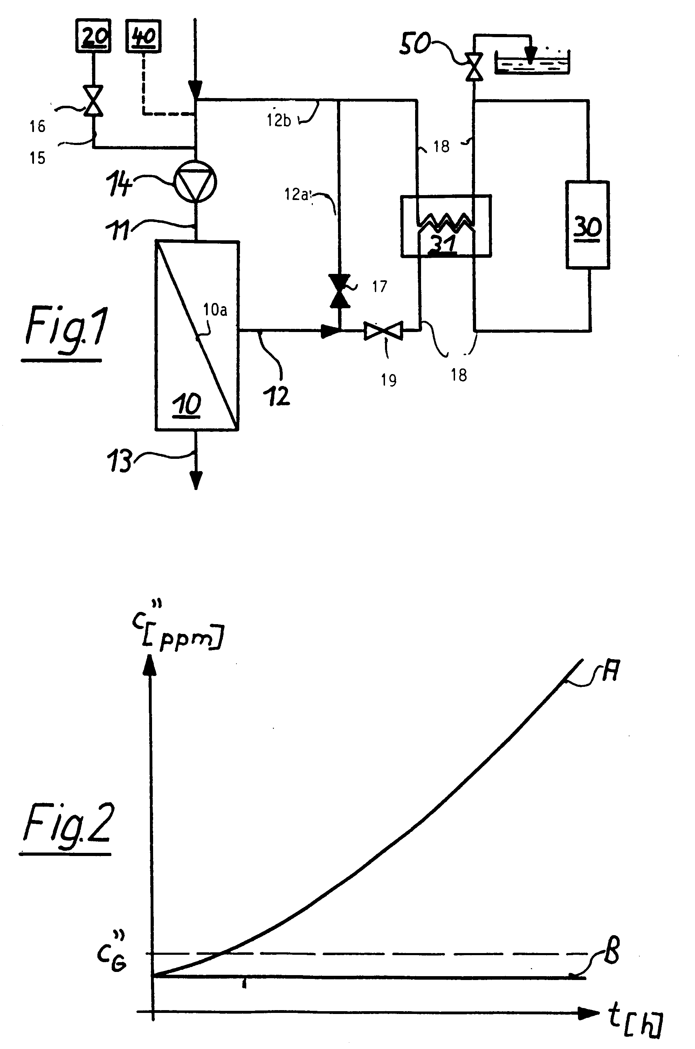

Fig. 1 zeigt einen Abschnitt einer Anlage zur Aufbereitung kampstoffvergifteter Wässer mit einem Salzgehalt von unter 500 ppm. Bei den aufzubereitenden Wässern kann es sich beispielsweise um Fluß-, See- oder Grundwasser handeln. Der dargestellte Abschnitt der Anlage betrifft eine Trennstufe 10, die nach der Umkehrosmose arbeitet und eine aus organischen Materialien gebildete, semipermeable Membran aufweist. Die semipermeable Membran 10a teilt die Trennstufe 10, die mit einer Rohwasserleitung 11 und einer Retentatleitung 12 auf der einen Seite der Membran 10a und auf der anderen Seite der Membran mit einer Permeatleitung 13 verbunden ist.

Stromauf der Trennstufe 10 ist in die Rohwasserleitung 11 eine Druckpumpe 14 eingeschaltet, die den notwendigen Arbeitsdruck zur Auftrennung der Kampfstoffe an der Membran im Rohwasser erzeugt, wobei ein Retentat mit angereichertem Kampfstoffgehalt und ein Permeat gebildet wird, das kampfstoffarm ist. Das der Trennstufe 10 zugeführte Rohwasser ist bereits durch eine nicht gezeigte Feinfiltriereinrichtung vorbehandelt.

Das Problem bei der Aufbereitung von kampfstoffvergifteten Wässern besteht darin, daß Kampfstoffe die Standzeit von Trennstufen, die nach der Umkehrosmose arbeiten, drastisch herabsetzen. Denn die hierbei verwendeten semipermeablen Membranen aus organischen Polymeren werden durch Kampfstoffe aufgeweicht. Dadurch durchdringen die Kampfstoffe mit ansteigender Betriebsdauer der Anlage in immer größerem Ausmaß die semipermeable Membran und gelangen ins Permeat. Die Kurve A in Fig. 2 verdeutlicht dies und zeigt, daß die Konzentration c" des Kampfstoffes im Permeat bereits nach wenigen Stunden Betrieb der Anlage den Grenzwert c"_{G} überschreitet.

Der vorstehend erwähnte Grenzwert liegt - wie eingangs erläutert - für Kampfstoffe vom VX-Typ bei 20 ppb und ist in Figur 2 mit einer gestrichelten, horizontal verlaufenden Linie dargestellt.

Um die Membranen gegenüber Kampfstoffen zu stabilisieren, salzt man das Rohwasser mit einer Dosiervorrichtung 20 (Fig. 1) auf, die über eine Verbindungsleitung 15 mit einem eingeschalteten ersten Ventil 16 mit der Rohwasserleitung 11 verbunden ist, und führt es mit einem Salzgehalt von über 1 000 ppm, vorzugsweise über 2 000 ppm, insbesondere über 3000 ppm der nach der Umkehrosmose arbeitenden Trennstufe 10 zu. Zur Überwachung wird der Salzgehalt in einer Meßvorrichtung 40 gemessen, die mit der Rohwasserleitung 11 verbunden ist. Dies kann mittelbar über die Feststellung der Leitfähigkeit erfolgen. Das durch die Aufsalzung erzielte Ergebnis zeigt der Kurvenverlauf B in Fig. 2. Danach bleibt die Konzentration c" des Kampfstoffes im Permeat unabhängig von der Betriebsdauer t konstant und unterhalb des Grenzwertes c"_{G}.

Das in Figur 2 gezeigte Diagramm bezieht sich auf die Abtrennung von VX-Kampfstoff aus Trinkwasser, wobei die VX-Konzentration im Rohwasser ca. 17,5 ppm betrug. Die Leitfähigkeit des Rohwassers selbst betrug ca. 330 µS/cm, wobei das Rohwasser durch Zugabe von Kochsalz auf 3 000 ppm aufgesalzen war. Der Grenzwert c"_{G} beträgt 20 ppb. Die Zeitkoordinate ist normiert auf den Durchbruch der Kurve A durch den Grenzwert, der im dort dargestellten Versuch etwa nach 6 Stunden erfolgte.

Die Aufsalzung wird gemäß einer vorteilhaften Ausführungsform möglichst einfach dadurch gestaltet, daß man das von der Trennstufe erhaltene Retentat in der Retentatleitung in einem Kreislauf zur Rohwasserleitung 10 zurückführt. Hierzu ist die Retentatleitung 12 über die Leitungsäste 12a und 12b mit der Rohwasserleitung 11 verbunden, wobei in den Kreislauf ein weiteres Ventil 17 eingeschaltet ist.

Um die Aufsalzung möglichst einfach zu gestalten, führt man entsprechend Fig. 1 das von der Trennstufe 10 erhaltene Retentat im Kreislauf wieder zurück. In diesen Kreislauf 11, 12, 12a und 12b gibt man mittels der Dosiereinrichtung 20 zu Beginn der Aufarbeitung so viel Salz zu, bis sich der geforderte Mindestsalzgehalt vor der Trennstufe 10 einstellt. Zweigt man nichts vom Retentat ab, verbleibt das Salz im Kreislauf des Retentats, da nur sehr geringe Salzmengen ins Permeat übergehen. Im Gegensatz zu einer Ableitung des Retentats ergibt der Kreislaufbetrieb folgende Vorteile:
- Der Salzbedarf für die Aufsalzung ist gering, was die Logistik erleichtert.
- Der Anteil des aufbereiteten Wassers zum zugeführten kampfstoffvergifteten Wasser liegt hoch.

Mit den erzielten Vorteilen des Kreislaufbetriebes handelt man sich auch den Nachteil ein, daß sich der Kampfstoff mit steigender Betriebsdauer aufkonzentriert.

Um Abhilfe zu schaffen, zersetzt man gemäß einer vorteilhaften Ausführungsform den sich im Kreislauf des Retentats ansammelnden Kampfstoff in einem Aggregat 30. Dies kann kontinuierlich oder diskontinuierlich erfolgen, wobei es genügt, daß man den Kampfstoff entsprechend der Fig. 1, in einem Teilstrom zersetzt. Hierzu geht von der Retentatleitung 12 ein Aggregatkreislauf 18 ab, in den das Aggregat 30 eingeschaltet ist und der zum Kreislauf 12a,b zurückgeführt ist.

In dem Aggregat 30 baut man zumindest kurzzeitig einen Druck von mindestens 219 bar auf und erhitzt die durchströmende Flüssigkeit auf mindestens 375° C, um den Kampfstoff zu zersetzen. Hierzu ist im Aggregat 30 eine Druckpumpe und Heizschlange, welche jeweils nicht gezeigt ist, eingebaut. Zur Aktivierung des Aggregatkreislaufs 18 ist ein drittes Ventil 19 vorgesehen, das zusammen mit dem zweiten Ventil 17, jedoch gegensinnig betrieben wird. Dies ist in Fig. 1 durch eine unterschiedliche Schraffierung der Ventile dargestellt.

Der Energiebedarf für das Aggregat 30 liegt hoch. Um diesen Bedarf zu verringern, wärmt man den kalten Strom, den man dem Aggregat 30 zuführt, mit dem von dort abgeführten heißen Strom vor. Hierzu dient der Wärmetauscher 31, durch den der Aggregatkreislauf an- und abstromseitig geführt ist.

Zur Aufsalzung des Rohstromes eignet sich in hervorragender Weise Kochsalz, da es überall erhältlich und in relativ geringer Konzentration die aus organischen Materialien bestehenden Membranen gegen Kampfstoffe stabilisiert.

Nach einer zu Anfang der Aufbereitung vorgenommenen Aufsalzung erhöht sich der Salzgehalt des im Kreislauf geführten Retentats sogar, weil frisches Rohwasser immer einen gewissen Salzgehalt aufweist. Um zu verhindern, daß der Salzgehalt des Retentats einen oberen Grenzwert überschreitet, zieht man kampfstoffreie Flüssigkeit über ein Auslaßventil 50, das abstromseitig im Aggregatkreislauf 17 angeordnet ist, solange ab, bis sich unter Zuführung von frischem und salzarmen Rohwasser der gewünschte Salzgehalt einstellt.

Die Aufbereitung von kampfstoffvergiftetem Wasser erfolgt automatisiert über eine speicherprogrammierbare Steuerung. Mit dieser Steuerung werden alle Ventile selbsttätig geöffnet und geschlossen. Ferner überwacht die speicherprogrammierbare Steuerung die Temperatur des der Trennstufe 10 zugeführten Rohwassers, damit die zulässige Betriebstemperatur der semipermeablen Membran nicht überschritten wird. Dieser Fall kann eintreten, wenn über das Aggregat 30 zur Zersetzung von Kampfstoff geleitetes Retentat nicht ausreichend rückgekühlt wird.

## Patentansprüche

1. Verfahren zur Aufbereitung kampfstoffvergifteter Wässer mit einem Salzgehalt von unter 500 ppm, wobei man in einer nach der Umkehrosmose arbeitenden Trennstufe (10) mit einer aus organischen Materialien gebildeten, semipermeablen Membran zugeführtes Rohwasser (11) in Retentat (12) und Permeat (13) aufteilt,
dadurch gekennzeichnet,
daß man das Rohwasser aufsalzt und mit einem Salzgehalt von über 1 000 ppm der nach der Umkehrosmose arbeitenden Trennstufe (10) zuführt.

2. Verfahren nach Anspruch 1,
dadurch gekennzeichnet,
daß der Salzgehalt mehr als 2 000, insbesondere mehr als 3 000 ppm beträgt.

3. Verfahren nach Anspruch 1 oder 2,
dadurch gekennzeichnet,
- daß man das Retentat im Kreislauf der Trennstufe (10) rückführt, und
- daß man zu Beginn der Aufbereitung zur Aufsalzung des Rohwassers Salz dem Kreislauf des Retentats zugibt.

4. Verfahren nach Anspruch 3,
dadurch gekennzeichnet,
daß man den sich im Kreislauf des Retentats ansammelnden Kampfstoff
- zumindest in einem Teilstrom des Kreislaufes des Retentats
- entweder kontinuierlich oder diskontinuierlich zersetzt.

5. Verfahren nach Anspruch 4,
dadurch gekennzeichnet,
daß man den Kampfstoff durch
- Druck von mindestens 219 bar und
- Temperatur von mindestens 375° C zersetzt.

6. Verfahren nach Anspruch 4 oder 5,
dadurch gekennzeichnet,
daß man den einem Aggregat (30) zur Zersetzung des Kampfstoffes zugeführten Strom mit dem dort abgeführten Strom in einem Wärmetauscher (31) vorerwärmt.

7. Verfahren nach einem der Ansprüche 1 bis 6,
dadurch gekennzeichnet,
daß man das Rohwasser (11) mit Kochsalz aufsalzt.

8. Anlage zur Aufbereitung kampfstoffvergifteter Wässer mit einem Salzgehalt unter 500 ppm, aufweisend eine nach der Umkehrosmose arbeitende Trennstufe (10) mit einer aus organischen Materialien gebildeten, semipermeablen Membran, wobei die Trennstufe (10) einerseits mit einer Rohwasserleitung (11) und einer Retentatleitung (12) und andererseits mit einer Permeatleitung (13) verbunden ist, und eine Dosiervorrichtung (20) für Salz zur Aufsalzung des Rohwassers, die mittels einer Verbindungsleitung (15) mit der Rohwasserleitung (11) verbunden ist,
gekennzeichnet durch
Steuerungsmittel, die die Dosiervorrichtung (20) derart steuern, daß das in der Rohwasserleitung (11) enthaltene Rohwasser einen Salzgehalt oberhalb 1000 ppm aufweist.

9. Anlage nach Anspruch 8,
dadurch gekennzeichnet,
daß eine Meßvorrichtung (40) zur Messung des Salzgehaltes des der Trennstufe (10) zugeführten Rohwassers mit der Rohwasserleitung verbunden ist.

10. Anlage nach Anspruch 8,
dadurch gekennzeichnet,
daß die Retentatleitung (12) zur Rückführung des Retentats im Kreislauf zur Trennstufe (10) über die Leitungsstücke (12a, 12b) mit der Rohwasserleitung (11) verbunden ist.

11. Anlage nach Anspruch 10,
gekennzeichnet durch
ein zumindest in einen Teilstrom des Retentatkreislaufes zwischengeschaltetes Aggregat (30) zur Zersetzung des sich im Retentatkreislauf ansammelnden Kampfstoffes und einem Aggregatkreislauf (18), der von der Retentatleitung (12) abgeht und zu den Retentatleitungsstücken (12a, 12b) zurückgeführt ist..

12. Anlage nach Anspruch 11,
dadurch gekennzeichnet,
daß das Aggregat (30) zur Zersetzung des Kampfstoffes eine Druckpumpe zur Erzeugung von mindestens 219 bar und eine Heizschlange zur Erzeugung einer Temperatur von mindestens 375° C aufweist.

13. Anlage nach Anspruch 11 oder 12,
gekennzeichnet durch
einen in den Aggregatkreislauf (18) eingeschalteten Wärmetauscher (31) zur Vorerwärmung des dem Aggregat (30) zugeführten Stromes mit dem vom Aggregat (30) abgeführten Strom.

## Claims

1. A process for treating water contaminated by warfare agents and having a salt content of less than 500 ppm, wherein untreated water (11) introduced into a reverse osmosis-type separator (10) provided with a semipermeable membrane of organic material is separated into a retentate (12) and a permeate (13),
characterized in that
salt is added to the untreated water which, when having a salt content of more than 1000 ppm, is introduced into the reverse osmosis-type separator (10).

2. The process of claim 1, characterized in that the salt content is greater than 2000 ppm, in particular greater than 3000 ppm.

3. The process of claim 1 or 2, characterized in that,
- in the cycle, the retentate is recirculated to the separator (10) and in that,
- to elevate the salt content of the untreated water, salt is added to the recirculating retentate at the onset of the treatment.

4. The process of claim 3, characterized in that, at least in a part of the stream of the recirculating retentate, the warfare agent accumulating in the recirculating retentate is decomposed either continuously or discontinuously.

5. The process of claim 4, characterized in that the warfare agent is decomposed at a pressure of at least 219 bar and at a temparature of at least 375°C.

6. The process of claim 4 or 5, characterized in that the stream introduced into an aggregate (30) for the decomposition of the warfare agent and the stream diverted therefrom are preheated jointly in a heat exchanger (31).

7. The process of one of claims 1 to 6, characterized in that the salt concentration of the untreated water (11) is elevated by the addition of common salt.

8. Installation for treating water contaminated with warfare agents and having a salt content of less than 500 ppm, said installation comprising a reverse osmosis-type separator (10) with a semipermeable membrane of organic material, said separator (10) being connected with a conduit for untreated water (11) and a conduit for the retentate (12) on the one hand, and on the other hand with a conduit for the permeate (13), and further comprising a salt metering device (20) to elevate the salt concentration of the untreated water, said metering device being connected by means of a junction conduit (15) with the conduit for untreated water (11),
characterized by
control means that control the metering device (20) in such a way, that the untreated water contained in the conduit for untreated water (11) shows a salt content of more than 1000 ppm.

9. The installation of claim 8, characterized in that a metering device (40) for measuring the salt concentration of the untreated water introduced into the separator (10) is connected with the conduit for untreated water.

10. The installation of claim 8, characterized in that the retentate conduit (12) for recirculating the retentate in the cycle to the separator 10) is connected with the conduit for untreated water (11) via conduit pieces (12a, 12b).

11. The installation of claim 10, characterized by an aggregate (30) intercalated at least in a part of the stream of the retentate cycle in order to decompose the warfare agent accumulated in the retentate cycle, and by an aggregate cycle (18) branching off from the retentate conduit (12) and leading back to retentate conduit pieces (12a, 12b).

12. The installation of claim 11, characterized in that the aggregate (30) for the decomposition of the warfare agent comprises a pressure pump to generate at least 219 bar and a heating coil to generate a temperature of at least 375°C.

13. The installation of claim 11 or 12, characterized by a heat exchanger (31) intercalated in the aggregate cycle (18) in order to preheat the stream introduced into the aggregate by the stream coming out from the aggregate (30).

## Revendications

1. Procédé pour le traitement d'eaux contaminées par des agents chimiques de combat montrant un teneur en sel de moins de 500 ppm, dans lequel, dans un séparateur (10) du type d'osmose inverse avec une membrane formée à partir de matériaux organiques, on sépare de l'eau brute alimentée (11) dans un rétentat (12) et un peméat (13),
caractérisé en ce que
l'on enrichit l'eau avec du sel et l'amène au séparateur du type d'osmose inverse (10), l'eau étant un teneur en sel de plus de 1000 ppm.

2. Procéde d'après la revendication 1, caractérisé en ce que le teneur en sel se monte à plus de 2000 ppm, en particulier à plus de 3000 ppm.

3. Procéde d'après la revendication 1 ou 2, caractérisé en ce que
- l'on reconduit le rétentat dans la circulation au séparateur (10), et que,
- pour enrichir l'eau brute avec du sel au commencement du traitement, on ajoute du sel à la circulation du rétentat.

4. Procéde d'après la revendication 3, caractérisé en ce qu' au moins dans un courant partiel de la circulation du rétentat, on décompose l'agent chimique de combat s'accumulant dans la circulation du rétentat soit continuement, soit discontinuement.

5. Procéde d'après la revendication 4, caractérisé en ce que l'on décompose l'agent chimique de combat à une force de pression d'au moins 219 bar et à une température d'au moins 375 °C.

6. Procéde d'après la revendication 4 ou 5, caractérisé en ce que, dans un échangeur de chaleur (31), on préchauffe le courant amené à un agrégat (30) pour la décomposition de l'agent chimique de combat avec le courant d'y évacué.

7. Procéde d'après l'une quelconque des revendications 1 à 6, caractérisé en ce que l'on enrichit l'eau brute (11) avec du gros sel.

8. Installation pour le traitement d'eaux contaminées par des agents chimiques de combat montrant un teneur en sel de moins de 500 ppm, ladite installation présentant un séparateur (10) du type d'osmose inverse avec une membrane formée à partir de matériaux organinques, le séparateur (10) étant lié d'un côté avec une conduite d'eau brute (11) et avec une conduite de rétentat, et de l'autre côté avec une conduite de perméat, et de plus présentant un dispositif de dosage (20) pour l'enrichement de l'eau brute avec du sel, ledit dispositif de dosage étant lié par moyen d'une conduite de connexion (15) à la conduite de l'eau brute (11), caractérisé par des moyens de réglage qui actionnent le dispositif de dosage (20) à tel point que l'eau brute contenue dans la conduite de l'eau brute (11) présente un teneur en sel au-dessus de 100 ppm.

9. Installation d'après la revendication 8, caractérisée en ce qu'une unité de mesure (40) pour le mesurage du teneur en sel de l'eau brute amenée au séparateur (10) est raccordée à la conduite de l'eau brute.

10. Installation d'après la revendication 8, caractérisée en ce que, pour reconduire le rétentat dans la circulation au séparateur (10), la conduite de rétentat (12) est raccordée à la conduite de l'eau brute (11) par moyens les pièces de conduite (12a, 12b).

11. Installation d'après la revendication 10, caractérisée par un agrégat (30) pour la décomposition de l'agent chimique de combat s'accumulant dans la circulation du rétentat, ledit agrégat étant interposé au moins dans un courant partiel de la circulation du rétentat, et par une circulation d'aggrégat (18) qui dérive de la conduite de rétentat (12) et est reconduite au pièces (12a, 12b) de la conduite de rétentat.

12. Installation d'après la revendication 11, caractérisée en ce que l'agrégat (30) pour la décomposition de l'agent chimique de combat comporte un refouler pour générer au moins 219 bar et un serpentin réchauffeur pour générer une température d'au moins 375°C.

13. Installation d'après la revendication 11 ou 12, caractérisée par un échangeur de chaleur (31) pour préchauffer le courant amené à l'agrégat (30) avec le courant évacué de l'agrégat (30).
